# EUROPEAN PATENT APPLICATION

(11) **EP 4 574 504 A1**
(43) Date of publication of application: **25.06.2025**
(21) Application number: 23218534.8
(22) Date of filing: 20.12.2023
(51) Int. Cl.: B60K 35/00, B60K 35/10, B60K 35/21, B60K 35/22, B60K 35/23, B60K 35/235, B60K 35/26, G02B 27/01

(54) **A DRIVER ASSISTANCE SYSTEM**

(71) Applicant: Harman Becker Automotive Systems GmbH, 76307 Karlsbad (DE)
(72) Inventor: KALINICHENKO, Victor, 76307 Karlsbad (DE)
(74) Representative: Westphal, Mussgnug & Partner, Patentanwälte mbB

(57) **Abstract**

A driver assistance system (100) for a vehicle comprises a processing unit (102), a user interface (104), an external camera unit (106), and a display unit (108), wherein the user interface (104) is configured to receive a first user input from an occupant of the vehicle and transmit the first user input to the processing unit (102), the processing unit (102) is configured to process the first user input and transmit a corresponding request to the external camera unit (106), the external camera unit (106), in response to the request, is configured to capture one or more images of a surrounding environment of the vehicle, the processing unit (102) is further configured to, based on the first user input, identify one or more objects in the one or more images captured by the external camera unit (106), the display unit (108) is configured to display the one or more images captured by the external camera unit (106), and to highlight the one or more identified objects in the displayed one or more images, the user interface (104) is further configured to receive a second user input from the occupant of the vehicle, the second user input including a selection of at least one of the one or more highlighted objects, and the processing unit (102) is further configured to cause an action to be performed in response to the second user input.

## Description

### TECHNICAL FIELD

The disclosure relates to a driver assistance system, in particular to a driver assistance system for a vehicle.

### BACKGROUND

Driver assistance may include any relief that is provided to an individual associated with a vehicle to increase individual protection and enhance driver experience. For instance, a driver of a vehicle may want to obtain information about locations of interest in a surrounding environment of the vehicle. When a driver retrieves such information by performing a search on a mobile device, for example, the driver may be distracted when performing the search while driving. If a driver stops in order to safely perform a search on a mobile device, this will delay the driver's arrival at a final destination. Instead of or in addition to obtaining information about locations or objects of interest, a driver may desire to select any other objects in a surrounding environment and, e.g., communicate with the selected object. This may require a driver to perform unauthorized and/or potentially dangerous actions.

There is a need for a driver assistance system that is able to reliably identify an object of interest and to subsequently perform a desired action in a safe manner in order to prevent accidents.

### SUMMARY

The driver assistance system and related method according to the various embodiments described herein provide a mechanism that allows to search, identify, and select one or more targets of interest in the surrounding environment of a vehicle. In order to do so, a driver of a vehicle does not have to perform hazardous actions such as, e.g., picking up their phone or handling a touch display of the vehicle while driving. The driver assistance system and related method are very user friendly and provide a very satisfying user experience. At the same time, road safety is significantly increased.

A driver assistance system for a vehicle is disclosed herein. The driver assistance system includes a processing unit, a user interface, an external camera unit, and a display unit, wherein the user interface is configured to receive a first user input from an occupant of the vehicle and transmit the first user input to the processing unit, the processing unit is configured to process the first user input and transmit a corresponding request to the external camera unit, the external camera unit, in response to the request, is configured to capture one or more images of a surrounding environment of the vehicle, the processing unit is further configured to, based on the first user input, identify one or more objects in the one or more images captured by the external camera unit, the display unit is configured to display the one or more images captured by the external camera unit, and to highlight the one or more identified objects in the displayed one or more images, the user interface is further configured to receive a second user input from the occupant of the vehicle, the second user input including a selection of at least one of the one or more highlighted objects, and the processing unit is further configured to cause an action to be performed in response to the second user input.

A method according to embodiments of the disclosure includes receiving a first user input from an occupant of a vehicle by means of a user interface, and transmitting the first user input to a processing unit, processing the first user input by means of the processing unit, and transmitting a corresponding request to an external camera unit, in response to the request, capturing one or more images of a surrounding environment of the vehicle by means of the external camera unit, based on the first user input, identifying one or more objects in the one or more images captured by the external camera unit by means of the processing unit, displaying the one or more images captured by the external camera unit by means of a display unit, and highlighting the one or more identified objects in the displayed one or more images, receiving a second user input from the occupant of the vehicle via the user interface, the second user input including a selection of at least one of the one or more highlighted objects, and causing an action to be performed in response to the second user input by means of the processing unit.

Other systems, features and advantages of the disclosure will be or will become apparent to one with skill in the art upon examination of the following detailed description and figures. It is intended that all such additional systems, methods, features and advantages included within this description, be within the scope of the invention and be protected by the following claims.

### BRIEF DESCRIPTION OF THE DRAWINGS

The arrangements may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a driver assistance system according to embodiments of the enclosure.
Figure 2 schematically illustrates a driver assistance system according to further embodiments of the enclosure.
Figure 3 illustrates an image of a surrounding environment of a vehicle in which objects have been highlighted.
Figure 4 illustrates images of a surrounding environment of a vehicle in which an object is identified and subsequently highlighted.
Figure 5 illustrates images of another surrounding environment of a vehicle in which an object is identified and subsequently highlighted.
Figure 6 schematically illustrates an inter-vehicle-communication unit according to embodiments of the disclosure.
Figure 7, in a flow diagram, schematically illustrates a method according to embodiments of the disclosure.

### DETAILED DESCRIPTION

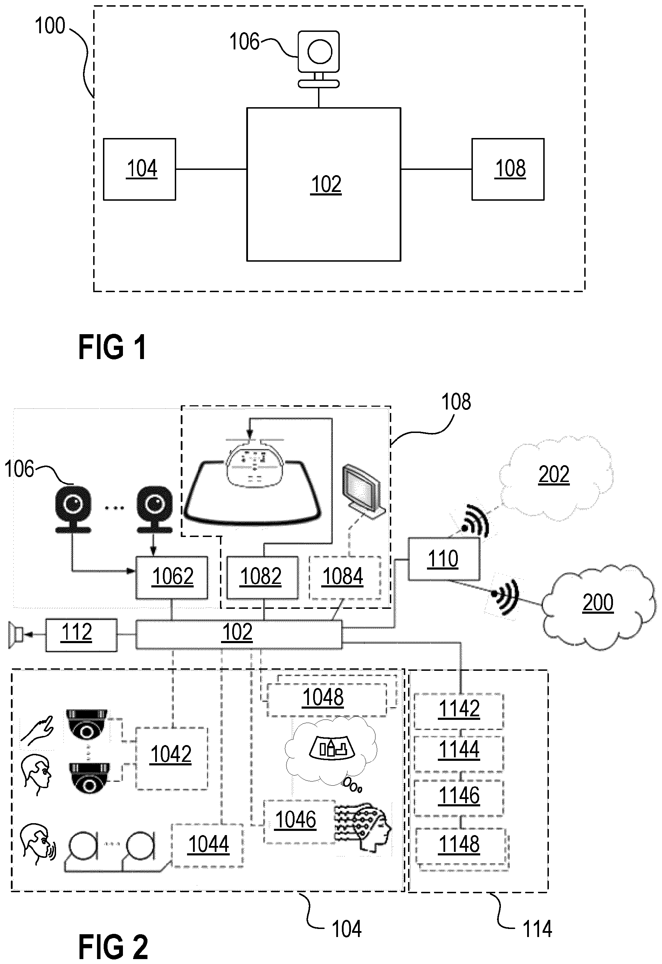

Figure 1 schematically illustrates a driver assistance system 100 according to embodiments of the disclosure. The driver assistance system 100 comprises a processing unit 102, a user interface 104, an external camera unit 106, and a display unit 108. The user interface 104 is configured to receive a first user input from an occupant (driver or other occupant) of the vehicle and transmit the first user input to the processing unit 102. The processing unit 102 is configured to process the first user input and transmit a corresponding request to the external camera unit 106. The external camera unit 106, in response to the request, is configured to capture one or more images of a surrounding environment of the vehicle. The processing unit 102 is further configured to, based on the first user input, identify one or more objects in the one or more images captured by the external camera unit 106. The display unit 108 is configured to display the one or more images captured by the external camera unit 106, and to highlight the one or more identified objects in the displayed one or more images. The user interface 104 is further configured to receive a second user input from the occupant of the vehicle, the second user input including a selection of at least one of the one or more highlighted objects, and the processing unit 102 is further configured to cause an action to be performed in response to the second user input.

According to one example, the selected at least one object may be a place or object of interest (e.g., a building, tourist attraction, public place, etc.). In this case, the action may comprise at least one of providing information about the selected at least one object to the occupant of the vehicle, and adding a location of the selected at least one object as a destination in a navigation system of the vehicle. This will be described in further detail by means of several examples below.

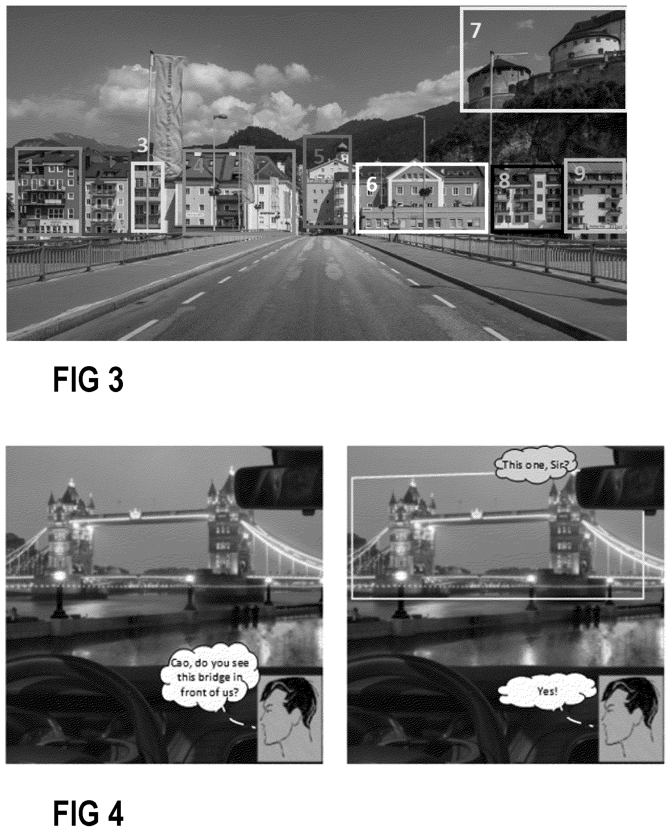

Referring to Figure 3, a driver and any other occupants of a vehicle may have a certain view from the vehicle. One or more buildings or other objects may be within a field of view of the respective occupant. In the example illustrated in Figure 3, several different buildings are visible within a driver's (and/or front passenger's) field of view. The driver and/or any other occupants of the vehicle may be specifically interested in one or even more of the visible objects. For example, an occupant of the vehicle may be interested in the castle that is visible in the upper right corner of the picture illustrated in Figure 3. The occupant of the vehicle may ask "What is that castle, there on that hill?". This question may be directed to the driver assistance system 100 (e.g., by first pressing a respective button or by pronouncing a specific name or code word), which registers the question as first user input. The user interface 104 may comprise one or more microphones, for example, with which the occupant's question can be received. The driver assistance system 100 subsequently may capture one or more images of a surrounding environment of the vehicle by means of the external camera unit 106. The one or more images may be processed and one or more objects may be identified in the image(s), e.g., by means of suitable image processing techniques. The driver assistance system 100 may then present one or more of the captured images on a display of the vehicle and highlight the one or more identified objects in the displayed one or more images, as exemplarily illustrated in Figure 3. The display may be a head-up display, or a display arranged in the dashboard of the vehicle, for example. Presenting the one or more captured images on a head-up display, however, is generally less distractive for a driver of the vehicle. Presenting the one or more images on a head-up display, therefor, increases road safety. According to one example, only one static image is presented to the occupant(s) of the vehicle. It is, however, also possible that a sequence of images is presented to the occupant(s) in order to adjust the view presented to the occupant(s) as the vehicle is moving on.

In the example illustrated in Figure 3, different objects are individually framed by means of differently colored frames. The occupant(s) may select a specific one of the highlighted objects by stating "Please give me more information about the object in the yellow frame", for example. Additionally or alternatively, each object of the one or more identified objects may be marked by means of a number, letter or symbol. In the example illustrated in Figure 3, numbers are used in addition to differently colored frames to mark the different identified objects. An occupant therefore may alternatively state "Please give me more information about object number 7", for example. Instead of verbally, it is however also possible to choose a specific one of several identified objects in any other way. For example, if the image(s) is (are) provided on a touch display, an occupant may simply touch the respective object on the display.

Alternatively or additionally, it is also possible that an occupant gazes at the desired object (e.g., for at least 1.5 - 2 seconds). This gaze may be captured by means of an internal camera unit, for example (e.g., eye-pupil-tracking camera). That is, a direction of view of the occupant may be identified, followed by an analysis by means of suitable target detection algorithms that are able to identify a target the occupant is gazing at. Alternatively or additionally, a specific object may be selected by pointing at it (e.g., for at least 1.5 - 2 seconds). A hand (i.e. a finger) of the occupant may be captured by means of an internal camera unit and the direction the occupant is pointing at may be determined by means of suitable image processing algorithms, for example. It is even possible that, alternatively or additionally, an object is selected by means of electroencephalography. In order to be able to do so, an occupant may be required to wear a special cap comprising sensors connected by wires, the sensors being in direct contact with the occupant's head. However, it may be even possible that brain signals be captured in any other suitable way, e.g., remotely by means of sensors arranged close to (but not in direct contact with) an occupant's head, e.g., in a headrest of the vehicle or in the roof above the head of the occupant.

According to one example, an object the occupant is gazing/pointing at or thinking of may be additionally highlighted (e.g., by increased brightness, by using a special color, by thickening the line forming the frame, by flashing the frame, etc.). If the additionally highlighted object corresponds to the object the occupant has selected, they can confirm the choice, for example. This can be done in any suitable way such as, e.g., continuing to gaze at the object, pressing a specific button on the steering wheel, on a specific control panel, or on the dashboard, by means of voice confirmation (e.g., by saying "yes" or "select"), etc. Such confirmation, however, is optional. Requesting confirmation from the driver/occupant, however, increases the accuracy of the selection, and may further decrease the risk of distracting the driver of a vehicle as a result of an erroneous recognition of the occupant's selection.

In the example described with respect to Figure 3 above, a plurality of objects is identified in the image(s) captured by means of the external camera unit 106. This, however, is only an example. Now referring to Figure 4, it is also possible that only one object is identified in the one or more images captured by means of the external camera unit 106. In the example illustrated in Figure 4, left side, an occupant may request "Do you see the bridge in front of us?". The driver assistance system 100 may identify the request and analyze the image(s), e.g., by means of artificial intelligence based search algorithms, in order to identify a bridge on the captured image(s). The identified object may then be highlighted on the picture(s) presented to the occupant (see Figure 4, right side). As has been described above with respect to Figure 3, the driver assistance system may optionally request confirmation that the correct object has been identified.

It is generally also possible that no object can be identified in the one or more images which matches the occupant's request. In this case, the occupant can be informed that no matches could be found. The occupant may the reformulate their request, for example. It is also possible that the occupant requests the driver assistance system that all objects in the one or more images be highlighted, even if they have not been identified to match the request.

Once a specific object has been selected, an action is performed. The action may comprise providing information about the specific object to the occupant(s) of the vehicle. For example, the driver assistance system 100 may output information about the object in any suitable way (e.g., spoken or in writing on a display). Alternatively or additionally, the action may comprise transmitting a location of the selected object to a navigation system and adding the location as a destination. It is even possible that the action comprises memorizing a selected object (target) in the driver assistance system for later retrieval. That is, an occupant may not receive information about the object while driving. The object may be memorized such that information about the object can be presented to the driver/occupant at a later point in time.

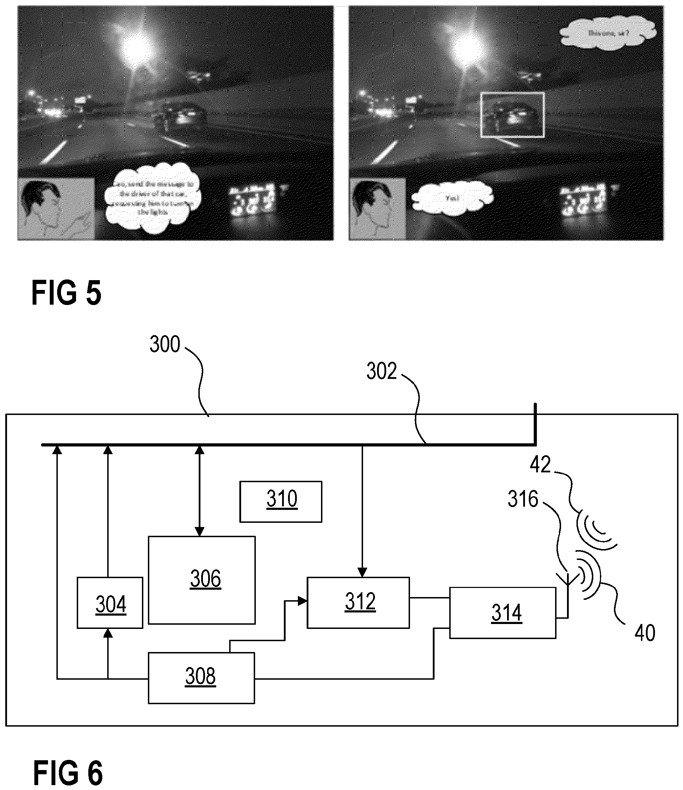

Selecting buildings, tourist attractions, public places, objects, or other places of interest, however, is only one example. According to another example, the selected at least one object may be a vehicle or person, for example. This will be described by means of different examples in the following. Referring to Figure 5, an occupant of a vehicle may discover a dangerous or abnormal behavior of a second vehicle. In the example illustrated in Figure 5, a second vehicle on the other lane is driving without its lights on. The driver of the vehicle may, for example, want to inform the driver of the second vehicle about the lights being off. Therefore, the occupant may request to the driver assistance system 100 "Do you see this car without its lights on?". The driver assistance system 100, in response to this first user input, may capture one or more images of the surrounding environment by means of the external camera unit 106, identify one or more vehicles in the one or more images, and present the one or more images to the occupant. Any identified vehicles may be highlighted in the image(s). Other vehicles may be highlighted in the image(s) similar to what has been described with respect to the objects, tourist attractions, public places, buildings and places of interest above. The occupant may confirm that the correct vehicle has been identified, or may select a specific one of several identified vehicles, similar to what has been described above (e.g., verbally, by gazing, pointing, thinking of the vehicle, pressing a button, etc.). The resulting action may comprise transmitting a message to the selected at least one vehicle.

That is, a message may be transmitted to the second vehicle, e.g., by means of inter-vehicle communication. For example, a message may be transmitted stating "Your lights are off', or similar. The driver of the second vehicle may react to such a message, e.g., by switching on their lights, and/or by answering by transmitting a response. Instead of or in addition to transmitting a message to another vehicle, one or more images captured by the external camera unit 106 may be stored by the driver assistance system 100 for later retrieval. It is even possible, that a message to an appropriate authority is transmitted. If, for example, an occupant of the vehicle recognizes a hazardous driving behavior of a second vehicle, they may want to inform the police about it. This may also apply, for example, if an occupant of the vehicle witnesses a crime or heavy violation of traffic regulations, for example.

If, for example, an occupant of the vehicle witnesses a crime, they may request to the driver assistance system 100 "Do you see that person wearing a yellow jacket and carrying a black bag?". The driver assistance system 100 may then identify and highlight any persons present in the surrounding environment of the vehicle, similar to what has been described with respect to the objects, places of interest, and vehicles above. An occupant of the vehicle may select one or more of a plurality of highlighted persons in the one or more images, or may confirm that one person highlighted in the one or more images is the correct person. Images may be transmitted to an authority (e.g., the police) instantaneously, or may be stored in the system for later transmission (e.g., if an authority requests further evidence of a reported crime or unauthorized behavior). It is even possible that the driver assistance system 100 in such cases continues capturing images or even capture video footage, in order to collect further evidence, as long as the concerned person or vehicle is within the field of view of the external camera unit 106. When one or more images are transmitted to an authority, an exact geolocation of the position at which the one or more images had been captured may additionally be transmitted.

According to an even further example, it is also possible that one or more images or video data captured within a certain time frame before the occupant provided first user input are stored for later retrieval and/or transmission to an authority. An occupant may request the driver assistance system 100 "Please memorize the black vehicle in front of us and track its behavior" , for example. The concerned vehicle may then be identified in one or more images captured by means of the external camera unit 106, highlighted, and, after a respective selection has been provided by the occupant, the requested action may be performed, similar to what has been described above. In this case, however, continuous video recording and/or continuously capturing images of the surrounding environment would be required, even before the occupant provides the first user input. According to one example, images may be captured continuously and may be stored for a defined length of time. For example, images may be stored for 30 minutes before being overwritten by newly captured images. This allows to access images captured during the last 30 minutes. Any other shorter or even longer period of time could also be selected after which images get overwritten.

Another alternative or additional action that may be performed in response to a second user input from the occupant comprises identifying a license plate of another vehicle. If, for example, an occupant experiences another vehicle performing unauthorized and/or hazardous driving actions, they may identify the concerned vehicle in the one or more images captured by the external camera unit 106, similar to what has been described above, and the license plate may subsequently be identified in the one or more images. The identified license plate number may be stored and/or transmitted to an authority, for example. It may be possible that a license plate of another vehicle cannot be identified on the one or more captured images, e.g., at night time. The driver assistance system 100, therefore, may additionally comprise a night vision camera, for example, in order to be able to identify license plates also at night. It is, however, generally also possible that license plates are not identified by means of the one or more captured images. For example, it is also possible that vehicles transmit specific vehicle IDs between each other, e.g., by means of transponders. Such vehicle IDs could be the same or different than the license plate. A vehicle ID, however, also allows that messages between vehicles be sent to the correct recipient.

As mentioned above, wireless communication between vehicles may be initiated after a vehicle has been selected in the one or more images captured by the external camera unit 106. Wireless communication may include sending a message, the message including the sender's plate number, addressee's (i.e. target vehicle's) plate number and an individual message or a code of a pre-defined message (for example, code 001 may mean "Turn on the lights"). All vehicles within a defined radius around the sending vehicle (e.g. 200 m), may receive the message, and may decide whether they are the correct recipients of the message. If the addressee's plate number included in the message corresponds to the plate number of a vehicle which has received the message, a receiver unit mounted on the receiving vehicle may generate an acknowledgement message and transmit it to the sending vehicle via radio channel. An acknowledgement message may have any suitable form and content. For example, an acknowledgement message may have the same structure as the original message: Sender plate number, followed by addressee plate number (e.g., may be copied from the sender field of the received message), followed by an individual message or a generally known message code (for example, code 801 may mean "message received"). In addition to sending an acknowledgement message, the receiver unit of the receiving vehicle may decode the initial message and report it to the driver of the receiving vehicle, e.g., using one or more information tools (head-up display, head-unit, dashboard, audio-system, etc.). The message interpretation may be displayed or pronounced in a language selected by the user as communication language.

After having received a message from a vehicle, the driver of the receicing vehicle can acknowledge the message to stop receiving the same messages from drivers of other vehicles. For example, having received a message that the vehicle is noisy and there might be a problem, the driver of the concerned vehicle can acknowledge that they have understood the situation, thus, ignoring the same messages from other drivers during the same driving session.

Message codes may be unified between car manufacturers, in order to allow vehicles of different makes to easily communicate with each other by means of standardized codes. In addition, a list of pre-defined standard messages may be updatable. It is also possible that some messages are country or area dependent. A message codes database in a vehicle may be updated regularly or when crossing the border from a local transportation agency server/cloud, for example. According to one example, country dependent messages may have dedicated codes (e.g. the range between 200 and 599).

Pre-defined messages generally may concern any possible situations: dangerous maneuvers, disturbing/impolite behavior, compliments for being polite (e.g. "Thank you!", "You are welcome!"), which are otherwise often signalized by misusing the lights and alarm lights, non-proper state of the vehicle (e.g., "door open", "trunk open"), dangerous state of the vehicle (e.g., "flat tire", "smoke", "fire", "strange noise"), intentions (e.g., message "Please, go first!" may be transmitted if only one lane is available and/or several vehicles have the same priority), requests (e.g., message "Please, give me the way!" may be transmitted if another vehicle is using a wrong lane on a motorway, or if a vehicle is blocking the road), etc. Sending pre-defined messages (e.g., specific message codes) allows that a received message is presented to occupants of the receiving vehicle in a desired language. If, for example, an English speaking occupant of a first vehicle sends an individual, verbally pronounced message to a French speaking occupant of another vehicle, they might not be able to understand the message. If pre-defined messages are sent, the messages can be presented to the occupants of the receiving vehicle in a language that has been selected as standard language. That is, the pre-defined message may be presented in French to the occupants of the receiving vehicle. By allowing only pre-defined messages to be sent to other vehicles, it may also be possible to prevent impolite or rude messages to be sent to other vehicles.

If vehicles are required to exchange more than one message for any reason, a target generally does not have to be searched and selected again. The last target vehicle can be memorized, and a communication can be continued with the same target vehicle, unless a new target vehicle is selected. For example, the driver of a vehicle that was given the way from another vehicle may send a "Thank you!" message without selecting the other vehicle again. This is valid for any vehicle participating in a communication. For example, when the other vehicle receives the "Thank you!" message, it is not required to identify that vehicle again. It may simply reply, e.g., with another message "You are welcome!" and the vehicle previously participating in the communication may be chosen by default. It is also possible to display (e.g., using a head-up display, dashboard, or display of the head-unit) a list of vehicles in the near-zone (within a certain radius) which have recently communicated with the occupant in order to provide the occupant with an opportunity to choose one vehicle out of the list of vehicles for transmitting a message to.

According to another example, some pre-defined messages may be designated as broadcast messages that are to be received to all vehicles within a defined radius. For example, a message "Danger in front", may be sent to a plurality of vehicles, e.g., if a radar control has been seen or identified, or an accident happened blocking the road, etc. Such type of message is often illegally signalized by drivers by blinking the front lights, i.e. by misusing the lights.

In some cases, selecting vehicles or persons as targets may be too slow when the first user input is a spoken input (e.g., "Please select that blue vehicle and send a *Give me the way, please!* message to him"). In some cases, providing a spoken first user input may also be inconvenient for any reasons. Therefore, the driver assistance system 100 optionally may comprise or may be coupled to a dedicated button or other control located in some convenient area (e.g. on the steering wheel or dashboard). By simply pressing the dedicated button, automatic search of all ground vehicles located in direct visibility in front of, beside and behind the vehicle may be activated. All identified vehicles may be highlighted, similar to what has been described above. Corresponding images may be presented on a windscreen of the vehicle and/or on any other suitable displays such as, e.g., on the side windows, exterior mirrors, on the rear view mirror, or on the display of a head-unit. According to one example, if a driver wants to say *"Give me the way, please!"* to a vehicle driving in front, they may be simply required to press a dedicated "Search vehicle targets button", e.g., on the steering wheel, followed by pointing towards the desired target, and subsequently confirming the selection by verbally pronouncing the desired message. According to another example, if a message is to be sent to a vehicle towards the right, it may be enough to press a "Search vehicle targets button" on the steering wheel followed by rotating the head to the right side and verbally pronouncing the desired message.

It may even be possible that some defined messages that are used regularly are associated with a dedicated "hot key" or with some defined tactile combination on the steering wheel (e.g. double finger hit), or on the touchpad (e.g. drawing a cross or hitting the touchpad with two fingers simultaneously at horizontal disposition three consequent times, etc.). Such "hot keys" or "hot combinations" may be individually programmable by a user. Further, it may be possible that the driver assistance system automatically identifies one or more pre-defined messages that may be suitable in a certain situation. For example, the driver assistance system 100, based on the image(s) captured by the external camera unit 106 may assess a current situation, e.g., by means of any suitable image processing techniques and artificial intelligence algorithms, and may present one or more messages that are considered suitable in the situation to the occupant of the vehicle. The occupant may then select one of the one or more messages presented to them to be transmitted to one or more other vehicles. This similarly applies for a vehicle receiving such a message. A driver assistance system of the receiving vehicle may similarly assess the received message and provide one or more possible response messages to an occupant of the receiving vehicle to be transmitted in response to the original message. According to one example, an occupant of a vehicle receiving a message "Give me the way, please", may be offered one or more pre-defined messages to respond such as, e.g., "I am sorry!", or "I apologize, but I cannot do it now", depending on whether the current traffic situation allows, or does not allow them to move to the right lane.

A particular type of pre-defined messages may also be, for example, "Like" and "Dislike", which can be received, if other drivers like your driving style or a certain behavior. An occupant may store any "likes" and "dislikes" they received during a driving session in a database (e.g., at personal cloud location, in social networks for sharing with others, etc.). A collection of likes/dislikes can be permanently stored and may be sorted, e.g., by weeks/months/years. Such collections could be used, e.g., for self-analysis and consideration of self-improvement.

Now referring to Figure 2, a driver assistance system according to further embodiments of the disclosure is schematically illustrated. As has been described with respect to Figure 1 above, the driver assistance system includes a processing unit 102, a user interface 104, an external camera unit 106, and a display unit 108. The user interface 104 may comprise one or more sub-units. For example, the user interface 104 may comprise an internal camera unit 1042. By means of an internal camera unit 1042, it may be detected if an occupant is pointing or gazing at a specific object, for example, in order to select the object. Additionally or alternatively, the user interface 104 may comprise a voice processing unit 1044. By means of a voice processing unit 1044, spoken commands of an occupant may be recorded. Additionally or alternatively, the user interface 104 may comprise an electroencephalography analyzing unit 1046, in order to be able to detect brain activities of an occupant (e.g., occupant thinking of a specific object). Alternatively or additionally, the user interface 104 may comprise any other kind of interface unit 1048 such as, e.g., one or more buttons and/or knobs.

The driver assistance system 100, e.g., the processing unit 102 of the driver assistance system 100, may be coupled to a navigation system 1142, an inter-car communication unit 1144, and/or any other external subsystems 1146, 1148. The driver assistance system 100, e.g., the processing unit 102, may additionally or alternatively be coupled to or may comprise a wireless connection unit 110. By means of a wireless connection unit 110, the driver assistance system 100 may communicate, e.g., with a voice assistant 200 (e.g., an in-car voice assistant or an external voice assistant implemented in a cloud) and/or an external database or cloud 202 (e.g., sightseeing data base and recognition system). The driver assistance system 100, e.g., the processing unit 102, may be further coupled to an audio unit 112 comprising one or more loudspeakers. The display unit 108 may comprise or may be coupled to at least one of a head-up display 1082, and a display 1084 (e.g., a touch display) arranged at any other position in the vehicle. The external camera unit 106 may comprise or may be coupled to an image analysis unit 1062, for example.

The external camera unit 106 may comprise one or more cameras mounted at suitable positions in or on the vehicle. According to one example, a single 360° camera may be arranged on the roof of the vehicle. According to other examples, a plurality of cameras may be mounted at different positions in or on the vehicle. One or more cameras may be arranged inside the vehicle and close to the windscreen, for example, in order to be able to monitor a surrounding environment in front of the vehicle. Additionally or alternatively, one or more cameras may be arranged in or on the front lights or in or on the front bumper of the vehicle, for example. In order to be able to monitor a surrounding environment towards the sides of the vehicle, one or more cameras may be arranged in or on the doors of the vehicle, in the A or B pillars, or in or on the roof of the vehicle facing sideways, for example. In order to be able to monitor a surrounding environment towards the rear of the vehicle, one or more cameras may be arranged behind or anywhere close to the rear window, in or on the trunk of the vehicle, or in or on the rear bumper, for example. Any other locations in or on the vehicle are generally possible.

The external camera unit 106 may be coupled to an external image analysis unit, for example. The external camera unit 106 may transmit any captured images to the external image analysis unit and the external image analysis unit may analyze the one or more images and detect potentially interesting objects (buildings, places of interest, geographical objects, vehicles, persons, etc.). The results of such analysis may be transmitted to the processing unit 102, for example, to be presented to the occupant of the vehicle. An analysis performed by an external image analysis unit may optionally comprise coordinates of identified objects in respect to some given point, e.g. in respect to the occupant's eyes, or to a head-up display. Coordinates can be angular positions in horizontal and vertical planes, or positions, or Cartesian coordinates of one of a plurality of points of the concerned object. In addition, an external image analysis unit may deliver horizontal and vertical dimensions of the object.

Parameters (e.g., coordinates, sizes,...) of one or more identified objects may be transmitted from an external image analysis unit to the processing unit 102, which may store the parameters and/or may try to identify a geolocation of the object, by considering a current geolocation of the vehicle (e.g., obtained from a navigation system), a direction of travel of the vehicle, and a direction of the object with respect to vehicle, for example. Optionally, if the driver assistance system 100 is connected to a global network (e.g., the Internet) providing maps with street view possibilities, the processing unit 102 may identify the object by means of comparison of the street view images with the image(s) captured by the external camera unit 106. The processing unit 102 may further acquire more information about an object, including, e.g., a name of the object, its exact geolocation, parking possibilities, an official website, phone number(s), and/or any other information, which can be obtained from an open source. Artificial Intelligence algorithms located in the same or a different cloud, may perform such a search on request, using cloud resources and then deliver information to the processing unit 102.

When inter-vehicle communication is required, an external image analysis unit may continuously analyze the image(s) captured by the external camera unit 106, and identify other vehicles in the surrounding environment of the vehicle as potentially interesting targets. When one or more potentially interesting targets have been found, such targets may be continuously tracked. During the tracking process different parameters of the targets may be determined: speed (relative or absolute), a lane it is driving on, its location with respect to other vehicles on the road, etc. In other words, any parameters may be determined which, may help Artificial Intelligence (AI)-based algorithms to identify some vehicles as potentially interesting targets for the driver in order to be able to establish a communication with them. Such an AI-based algorithm can be integrated into the processing unit 102. After one or more potentially interesting targets have been identified, the processing unit 102 may proceed to highlight (e.g., frame) them while presenting them by means of the display unit 108.

When one or more potentially interesting targets have been identified, the occupant of the vehicle may be able to select one or more of them for performing one or more specific actions. One or more objects may be selected in any suitable way, as has been described above. For example, one or more objects may be selected by means of on eye and/or finger tracking cameras connected to an eye and finger tracking unit (EFTU), which may use suitable algorithms in order to detect motion and direction of view of the eye, or a finger pointing direction. Alternatively or additionally, one or more objects may be selected using microphones connected to a voice processing unit (VPU), which may extract voice signals from a recorded signal, the recorded signal further including surrounding noises, and optionally analyze the speech. It is also possible that processed speech is not analyzed by a voice processing unit of the driver assistance system 100, but is "outsourced" instead to a dedicated cloud. For example, local processing may be useful for systems, where there is no connection to an in-car voice assistant, for example, where only potentially interesting targets are automatically identified and where the occupant only needs to select one of them. If connection to in-car voice assistant cloud-based algorithms is present, a voice processing unit may only purify the speech signal, and then forward it to the processing unit 102, which again may further forward it to an in-car voice assistant cloud via Wireless Connection Unit (WCU).

A potentially interesting target may additionally or alternatively also be selected by the occupant using Electroencephalography (EEG). This may require the occupant to put on a special cap that is supplied with special EEG-sensors. Such sensors may be wirelessly connected to the driver assistance system 100, for example. In this way, user comfort may be increased as there are no disturbing wires inside the vehicle. Any kind of wired connection, however, is generally also possible. According to some embodiments, EEG-sensors may be used which do not require the occupant wearing a cup. EEG-sensors may be used that are configured to remotely read brain signals without being in direct contact with a user's head. Irrespective of how brain signals are transmitted from one or more EEG-sensors to the driver assistance system 100, the driver assistance system 100 may analyze and interpret the signals, e.g., by means of an EEG-analyzer. In this way, EEG-signals may eventually be transformed into commands, which may be routed to the processing unit 102.

Potentially interesting targets may be selected by an occupant in any other suitable way, e.g. via buttons or via a touchpad and/or using pre-defined tactile combinations. Different ways of selecting a potentially interesting target may be provided in a vehicle. An occupant may choose individually, which method they prefer, e.g., whether they want to point at a potentially interesting target, gaze at a potentially interesting target, formulate a verbal command to select a potentially interesting target, press a button, operate a touch display, perform a tactile combination of a steering wheel of the vehicle, using EEG-sensors, etc. One or more methods of selecting a potentially interesting target may be combined with each other (e.g., finger pointing and gazing). This makes the driver assistance system 100 very user friendly, as it allows to individually choose one or more methods, and the accuracy of the system may be increased by combining two or more different selection methods.

For a user-initiated potentially interesting target search and selection, an in-car voice assistance may be used. As mentioned above, an occupant's command (first and/or second user input) may be received via one or more internal microphones, and may optionally pass through a preliminary speech signal purification algorithm, which removes interior car noises from the received microphone signal. The command may be sent from the processing unit 102 to a voice assistant 200, e.g., via a wireless connection unit 110. In the voice assistant 200, speech recognition algorithms may be applied, for example, and potentially interesting targets may be searched.

The voice-assistant 200 may transmit a single command, or a series of commands to the processing unit 102, in order to prompt the processing unit 102 to have at least one image captured by means of the external camera unit 106. According to one example, a driver may request information about an object located ahead of the vehicle. After having received the command from the voice-assistant 200, the processing unit 102 may request the external camera unit 106 to capture one or more images of a surrounding environment of the vehicle, e.g., of a surrounding environment in front of the vehicle. In the meantime, the processing unit 102 may prepare for further potentially interesting target tracking (object identification) and highlighting. The external camera unit 106 may capture one or more images by means of one or more cameras. The one or more images may optionally be stored for further use by a potentially interesting target tracking algorithm, and may be sent to the processing unit 102. The processing unit 102 may forward the one or more captured images to the voice assistant 200, via a wireless connection unit 110, for example. After having received the one or more images, the voice assistant 200 may identify one or more potentially interesting targets (objects) in the one or more images, e.g., based on AI (artificial intelligence) image analysis algorithms, which can be physically located in the same or in a different cloud. The voice assistant 200 may further request that the correct object be found on the image (the object matching the occupant's initial request). If one or more objects matching the occupant's initial request are found in the one or more images, the AI-based algorithm may provide the coordinates of the one or more objects on the image as well as other information such as, e.g., its size, e.g. in pixels.

After having identified one or more objects matching the requested objects, the voice assistant 200 may send one or more commands to the processing unit 102 to highlight the one or more objects in the one or more images when presented by means of a display unit 108 (e.g., on a head-up display). The voice assistant 200 may additionally transmit one or more parameters to the processing unit 102 relevant for highlighting the one or more objects (e.g., position of the object(s) on the image(s), and size of a frame that is to be used to frame the object(s)). Optionally, the voice assistant 200 may transmit a voice message to the processing unit 102. The processing unit 102 may cause a voice message to be output, e.g., by means of one or more loudspeakers in the vehicle. The voice message may request the occupant to confirm that the correct object has been identified, or to select one object, if more than one object has been identified. The voice message may be routed to an audio unit 112 of the vehicle, in order to be played back by means of one or more loudspeakers of the audio unit 112. Outputting a voice message, however, is only one example. It is also possible that one or more objects are highlighted in the one or more images and the occupant has to confirm/select an object without any further request to do so. According to a further embodiment, it is also possible that the occupant is requested to confirm/select an object by means of a message presented on a display of the vehicle.

Signal and command transmission/routing as well as image processing generally require a certain amount of time. When the vehicle moves on along its route, the coordinates of the potentially interesting target(s) on the one or more images as well as their size may change. The driver assistance system, therefore, may be configured to correct (update) the image(s) presented to the occupant accordingly. In particular, the position and/or size of any markings that are used to highlight the one or more objects may change as the vehicle moves and before the occupant confirmed/selected an object. Therefore, after the processing unit 102 has received a command from the voice assistant 200 to highlight one or more objects in the one or more images using specific coordinates and sizes, it may forward the commands to the external camera unit 106. The external camera unit 106 may adjust parameters of the potentially interesting target(s) accordingly, followed by starting an image tracking algorithm. The external camera unit 106 may then send corrected parameters of the potentially interesting target(s) to the display unit 108 (e.g., via the processing unit 102). If the one or more images are presented to an occupant by means of a head-up display, the display unit 108 may transform the parameters of the potentially interesting target(s) on the image(s) in consideration of coordinates that are used by the head-up display concerning the occupant's head position. A potentially interesting target tracking algorithm may be used such that the location and size of the potentially interesting target(s) are always known to a head-up display controller for the visible highlighting of the object(s) on the windscreen. The external camera unit 106 and the display unit 108 may be in direct communication with each other or may communicate with each other via the processing unit 102. Direct communication between the units, however, is generally more efficient with respect to latency minimization. It is generally possible that an audio signal (voice message) received by the processing unit 102 is intentionally delayed before outputting the message, in order to synchronize the audio signal with a point in time at which presentation of the one or more images by means of the display unit 108 is initiated.

Once one or more objects have been highlighted in the presented image(s), the occupant may be requested to confirm the highlighted object, or to select one of a plurality of highlighted objects. When the occupant confirms/selects an object, the processing unit 102 may initiate an appropriate action. For example, a request may be sent to the voice assistant, 200 for object identification. When the object has been identified, a search for information about the object may be initiated, e.g., using a suitable search engine. Any known search engine can be used for this purpose. Information about the object may be presented to the occupant in any suitable way. For example, (basic) information about the object may be presented by means of an audio signal. Presenting a written description of the object to a driver while the vehicle is moving may be hazardous. However, information about an object may be presented in written form to another occupant of the vehicle who is not the driver, for example. The occupant could verbally report or summarize the information to the driver. Optionally, if they are not satisfied with the information presented by the driver assistance system 100, the occupant may request further (e.g., more detailed) information about the respective object. Alternatively or additionally, an occupant may request the driver assistance system 100 to use the location of the respective object as a destination for a navigation system of the vehicle and start navigating to the location of the object. Any other action is generally possible.

By means of the examples presented above, it is demonstrated that there are generally many different possibilities of implementing the driver assistance system 100. Commands of an occupant may be received in many different suitable ways. Object(s) may be highlighted in images in many different suitable ways. An occupant may then confirm or select an object highlighted in the image(s) in any suitable way. Even further, signals and commands may be routed between the different units of the driver assistance system 100 in any suitable way. Even further, the action that is to be performed in response to an object being confirmed/selected by an occupant can be suitably chosen for any possible situation.

Identifying vehicles as potentially interesting targets is a special case when identifying potentially interesting targets (objects) in one or more images captured by the external camera unit 106. Vehicles are almost permanently present on roads, and there are only few situations when there are no other vehicles close by. Road situations are also generally changing rapidly. Therefore, establishing an inter-vehicle communication with another vehicle may be implemented in a very fast and ergonomic way. According to some examples, other vehicles may be identified in the one or more images and displayed accordingly by means of the display unit 108 automatically, without even requiring any user action (user input). Automatic identification and displaying may be individually activated by the occupant, for example. In some traffic situations, an AI-based algorithm may prepare and suggest sending pre-defined messages corresponding to a current traffic situation to specific other vehicles. For example, if on a highway another vehicle occupies the left lane, while the right lane is free, this situation may be captured by the driver assistance system 100 automatically, e.g., by using a suitable vehicle search algorithm when analyzing the one or more images. A suitable action may then be suggested to the driver, e.g., it may be suggested sending a pre-defined message: "Please, give me the way!" to the respective vehicle. The identified vehicle may be automatically highlighted in the image(s) presented to the occupant, and the suggested message may be displayed on a display.

Generally, automated vehicle identification may be implemented using the same technical implementations as described above. However, the algorithms used to identify vehicles instead of objects may differ somewhat. For automated vehicle identification, the external camera unit 106 may continuously capture images (e.g., a video stream may be captured), and perform vehicle search, and (optionally) number plate recognition. In addition, the driver assistance system 100 may automatically identify situations in which inter-vehicle communication may be suitable, for example, potentially incorrect or dangerous situations detected on the images of the surrounding environment (e.g., other vehicles occupying the wrong lane, vehicles without lights on in the dark, road accidents, speed controls, dangerous maneuvers of other vehicles, etc.). The driver assistance system 100 may have access to a list of situations in which inter-vehicle communication may be required (the list may be regularly updated), and algorithms for vehicle identification may be updated regularly. According to one example, exterior cameras may be used for vehicle identification. However, other vehicles in the surrounding environment may generally be detected by means of any other suitable sensors and data sources, e.g., in combination with exterior cameras (e.g., LIDAR sensors), geolocation, time of the day, season, etc.

Now referring to Figure 6, an inter-vehicle communication unit 300 according to embodiments of the disclosure is schematically illustrated. The inter-vehicle communication unit 300 may be connected to the processing unit 102 via a multi-purpose bus 302, for example. A multi-purpose bus 302 generally allows a sender and a receiver communicating via the bus 302 to operate in real-time as well as non-real-time, by sending synchronous or asynchronous messages. In the context of the driver assistance system 100 disclosed herein, the processing unit 102 may mainly play the role of a message router from the various units as illustrated in Figure 2 and the different components of the inter-vehicle communication unit 300.

When the voice processing unit 1044 receives a voice command from the occupant to send a message to a specific vehicle within a near-zone using inter-vehicle communication, a verification may be performed (e.g., by means of the processing unit 102) whether this is the first voice command for inter-vehicle communication during a present driving session. If yes, the driver assistance system 100 (e.g., the voice processing unit 1044 or the processing unit 102) may request the inter-vehicle communication unit 300 (e.g., a message code data base 306) to provide message code data via the bus 302. Message code data may include message code only. Including message transcripts into text into message code data is generally not required. In order to decrease the data volume to be sent, only text in the default language may be transmitted. For example, if the message code data base 306 contains a message code in a first column, its transcript into English in a second column, its transcript into German in a third column,... its transcript into simplified Chinese in a xyz column, then only the contents of some columns, e.g., columns 1 and 3, may be sent, if the default language of the vehicle is "German".

An ordinal number of the vehicle's default language may be stored in a settings unit 310, for example. After having received the message code data, the driver assistance system 100 (e.g., the voice processing unit 1044 or the processing unit 102) may identify which pre-defined message corresponds to the voice request of the occupant after passed through a speech to text module 304 (which however is not necessarily a part of the inter-vehicle communication unit 300). Such a correspondence may be established using AI-based algorithms, for example. As a result, the voice assistant 200 may receive the message code that is to be sent, or, if a corresponding message is not found, the occupant may be informed and asked to re-formulate the message. In case of ambiguities, an AI algorithm may even suggest two or more messages to the occupant to select one message to be sent. If this is the case, the occupant can select a specific message from a proposed list of messages by means of any suitable technique, e.g., using a scrolling wheel, or a mini-touchpad on the steering wheel, or verbally pronouncing the number of the desired message in the list. If, for example, an occupant of a vehicle wants to inform occupants of oncoming vehicles that there is a wild animal on the road, there may not be a suitable pre-defined message covering this situation. The AI algorithm may present alternatives such as, e.g., "General hazard in front", or "Serious traffic accident in front", of which the occupant may select one message. Even if none of the presented messages exactly capture the situation, they will still be able to warn drivers of oncoming vehicles and raise their awareness.

Generally, there may be different types of messages. One type of messages may include messages with a fixed addressee, another type of message may include broadcast messages. A broadcast message is a message, which is addressed to more than one vehicle, e.g., to all vehicles in the near-zone (within a defined radius), or to all vehicles fulfilling defined properties, for example, all vehicles going in the opposite direction. In order to prepare a message to be sent, the inter-vehicle communication unit 300 may require the plate number of the selected target vehicle. If it is the first communication with that specific vehicle, its plate number converted to text may be provided by a plate recognition module, which may be a component of the external camera unit 106, for example. If this is not the first message to or from a certain vehicle, its plate number may already be known and may be stored in a communication list. By default, (if a target vehicle is not explicitly selected), a message may be sent to the last vehicle that has been communicated with. For example, if a message (e.g., "Thank you!") has been received from a vehicle with the plate number "M K 324" and a response to this message is to be sent, no further search for the respective plate number of this vehicle is required. A reply message may simply be sent (e.g., "You are welcome!"), as the recipient is stored in the list of the last communicated vehicles still located in the near-zone. Moreover, its plate number will be in the first position of an inter-vehicle communication list. Therefore, the plate number can be omitted when a response is sent. It will be automatically sent to the last communicated car - 'M K 324".

When a composing and sending unit 312 receives a message code and a target vehicle plate number, it may start composing the message, which may comprise, e.g., message code (e.g., 2-4 bytes), plate number of the target vehicle (e.g., 10-12 bytes), and plate number of the sender (may be stored in the settings unit 310). After the message has been composed, it can be send to a transmission unit 314, which may be configured to prepare the message for radio-transmission to the target vehicle via an antenna 316. The antenna 316 may transform the electrical signal with the encoded message into radio-waves. In Figure 6, radio signals 40 transmitted from the antenna 316 as well as radio waves 42 received by the antenna 316 are schematically illustrated.

When the antenna 316 receives incoming signals 42, the received radio signals are transmitted it into electrical signals, which are provided to the transmission unit 314. The transmission unit 314 may be configured to transform an analog electrical signal into a digital format which may then be fed to a decoding unit 308. The decoding unit 308 may be configured to decode and analyze a received message. The decoding unit 308, for example, may first determine whether the received message is addressed to the receiving vehicle, or whether it is addressed to another vehicle. If it is addressed to another vehicle, the message may be dismissed. The received message may also be determined to be a broadcast message. In this case, the receiving vehicle may be determined to be one of several intended recipients. This can be determined, e.g., by analyzing an addressee field of the message, which may be compared with a plate number of the receiving vehicle. If the addressee plate number indicated in the received message is identical with the plate number of the receiving vehicle, or if no addressee plate number is indicated in the received message (i.e. broadcast message), the message may be further processed.

As there are various different formats and symbol types of plate numbers worldwide, comparing the plate number included in the message and the plate number of the receiving vehicle may be challenging. However, certain common rules and standards may generally be defined for plate number recognition format which may be applicable for all car manufacturers. Further processing of a received message may include sending an automatic acknowledgement by generating and feeding an acknowledgment command from the decoding unit 308 to the composing and sending unit 312, extracting message code and translating it into text by means of the message code data base 306, extracting a sender's plate number as text and routing it as text to the processing unit 102 via communication bus 302. Additionally, or alternatively, it may be possible to convert the text of the message and the sender's plate number into a speech signal by means of the speech to text module 304. The speech signal may be routed via the processing unit 102 to the audio unit 112 and then played back via the one or more loudspeakers.

If receipt of a message sent to other vehicles by means of the inter-vehicle communication unit 300 is not acknowledged by the receiver within certain pre-defined time (which can be hard coded or be stored in the settings unit 310), the same message may be sent again. After several unsuccessful attempts, the occupant may be informed that the message could not successfully be delivered to the target vehicle. This may be the case, for example, if a target vehicle does not support inter-vehicle communication, or if inter-vehicle communication in the receiving vehicle has been deactivated for any reason. The maximum number of attempts to send the same message may be defined in the settings unit 310, for example.

The inter-vehicle communication unit 300 as illustrated in Figure 6 and as described above, however, is only one of several different possible implementations. Messages may be sent to or received from other vehicles in any suitable way and using any suitable routine. This may include the use of different units, and/or a different processing routine. It is generally also possible to transmit messages to persons instead of vehicles. A person may carry an electronic device, and messages may be sent to the electronic device, for example. Messages sent to persons (electronic devices) may be broadcast messages, for example, as identification of specific persons may not be possible.

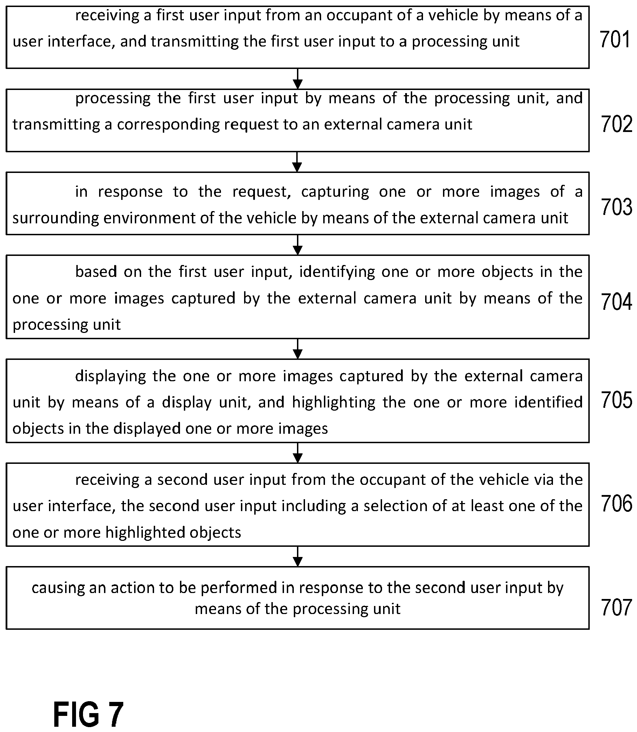

Now referring to Figure 7, a method according to embodiments of the disclosure is schematically illustrated. The method comprises receiving a first user input from an occupant of a vehicle by means of a user interface 104, and transmitting the first user input to a processing unit 102 (step 701), processing the first user input by means of the processing unit 102, and transmitting a corresponding request to an external camera unit 106 (step 702), in response to the request, capturing one or more images of a surrounding environment of the vehicle by means of the external camera unit 106 (step 703), based on the first user input, identifying one or more objects in the one or more images captured by the external camera unit 106 by means of the processing unit 102 (step 704), displaying the one or more images captured by the external camera unit 106 by means of a display unit 108, and highlighting the one or more identified objects in the displayed one or more images (step 705), receiving a second user input from the occupant of the vehicle via the user interface 104, the second user input including a selection of at least one of the one or more highlighted objects (step 706), and causing an action to be performed in response to the second user input by means of the processing unit 102 (step 707).

The selected at least one object may be a place or object of interest, and the action may comprise at least one of providing information about the selected at least one object to the occupant of the vehicle, and adding a location of the selected at least one object as a destination in a navigation system of the vehicle. Optionally, the method may further comprise retrieving the information provided to the occupant and/or the location of the selected at least one object from a database or cloud 202.

Alternatively, the selected at least one object may be a vehicle or person, and the action may comprise transmitting a message to the selected at least one object. Alternatively, or additionally, the action may comprise at least one of storing one or more images captured by the external camera unit 106, and transmitting a message to an appropriate authority.

Highlighting the one or more identified objects in the displayed one or more images may comprise at least one of framing each object of the one or more identified objects by means of a frame, marking each object of the one or more identified objects by means of a specific color, and marking each object of the one or more identified objects by means of a number, letter or symbol.

The general concept has been described with respect to a passenger car above. Generally, however, the vehicle may be any kind of vehicle such as, e.g., a passenger car, a van, a camper van, a caravan, a truck, a bus, a tractor, a motorbike, or a train, etc. It may be understood, that the illustrated systems are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. A driver assistance system (100) for a vehicle comprises a processing unit (102), a user interface (104), an external camera unit (106), and a display unit (108), wherein
the user interface (104) is configured to receive a first user input from an occupant of the vehicle and transmit the first user input to the processing unit (102),
the processing unit (102) is configured to process the first user input and transmit a corresponding request to the external camera unit (106),
the external camera unit (106), in response to the request, is configured to capture one or more images of a surrounding environment of the vehicle,
the processing unit (102) is further configured to, based on the first user input, identify one or more objects in the one or more images captured by the external camera unit (106),
the display unit (108) is configured to display the one or more images captured by the external camera unit (106), and to highlight the one or more identified objects in the displayed one or more images,
the user interface (104) is further configured to receive a second user input from the occupant of the vehicle, the second user input including a selection of at least one of the one or more highlighted objects, and
the processing unit (102) is further configured to cause an action to be performed in response to the second user input.

2. The driver assistance system of claim 1, wherein the selected at least one object is a place or
object of interest, and wherein the action comprises at least one of:
providing information about the selected at least one object to the occupant of the vehicle, and
adding a location of the selected at least one object as a destination in a navigation system of the vehicle.

3. The driver assistance system of claim 2, wherein the processing unit (102) is configured to
retrieve the information provided to the occupant and/or the location of the selected at least one object from a database or cloud (202).

4. The driver assistance system of claim 1, wherein the selected at least one object is a vehicle or person, and the action comprises transmitting a message to the selected at least one object.

5. The driver assistance system (100) of claim 1 or 4, wherein the selected at least one object is a vehicle or person, and the action comprises at least one of:
storing one or more images captured by the external camera unit (106); and
transmitting a message to an appropriate authority.

6. The driver assistance system of any of claims 1 to 5, wherein the user interface (104) comprises at least one of
an internal camera unit (1042);
a voice processing unit (1044);
an electroencephalography analyzing unit (1046); and
one or more buttons and/or knobs.

7. The driver assistance system of any of the preceding claims, wherein the display unit (108) comprises at least one of
a head up display (1082); and
a display (1084) arranged in a dashboard of the vehicle.

8. The driver assistance system of any of the preceding claims, wherein highlighting the one or more identified objects in the displayed one or more images comprises at least one of
framing each object of the one or more identified objects by means of a frame;
marking each object of the one or more identified objects by means of a different color; and
marking each object of the one or more identified objects by means of a number, letter or symbol.

9. The driver assistance system of any of the preceding claims, wherein the vehicle (10) is a
passenger car, a van, a camper van, a caravan, a truck, a bus, a tractor, a motorbike, or a train.

10. A method comprises
receiving a first user input from an occupant of a vehicle by means of a user interface (104), and transmitting the first user input to a processing unit (102),
processing the first user input by means of the processing unit (102), and transmitting a corresponding request to an external camera unit (106),
in response to the request, capturing one or more images of a surrounding environment of the vehicle by means of the external camera unit (106),
based on the first user input, identifying one or more objects in the one or more images captured by the external camera unit (106) by means of the processing unit (102),
displaying the one or more images captured by the external camera unit (106) by means of a display unit (108), and highlighting the one or more identified objects in the displayed one or more images,
receiving a second user input from the occupant of the vehicle via the user interface (104), the second user input including a selection of at least one of the one or more highlighted obj ects, and
causing an action to be performed in response to the second user input by means of the processing unit (102).

11. The method of claim 10, wherein the selected at least one object is a place or object of
interest, and wherein the action comprises at least one of:
providing information about the selected at least one object to the occupant of the vehicle, and
adding a location of the selected at least one object as a destination in a navigation system of the vehicle.

12. The method of claim 11, wherein the method further comprises retrieving the information
provided to the occupant and/or the location of the selected at least one object from a database or cloud (202).

13. The method of claim 10, wherein the selected at least one object is a vehicle or person, and the action comprises transmitting a message to the selected at least one object.

14. The method of claim 10 or 13, wherein the selected at least one object is a vehicle or person, and the action comprises at least one of:
storing one or more images captured by the external camera unit (106); and
transmitting a message to an appropriate authority.

15. The method of any of claims 10 to 14, wherein highlighting the one or more identified objects in the displayed one or more images comprises at least one of
framing each object of the one or more identified objects by means of a frame;
marking each object of the one or more identified objects by means of a specific color; and
marking each object of the one or more identified objects by means of a number, letter or symbol.
